## Europäisches Patentamt
## European Patent Office
## Office européen des brevets

(11) Publication number: **0 056 059**
**B1**

# EUROPEAN PATENT SPECIFICATION

(45) Date of publication of patent specification: **13.11.85**

(51) Int. Cl.⁴: **H 02 P 5/06**

(21) Application number: **81901895.3**

(22) Date of filing: **01.07.81**

(86) International application number:
**PCT/JP81/00152**

(87) International publication number:
**WO 82/00224 21.01.82 Gazette 82/03**

(54) **SPEED CONTROL DEVICE FOR ELECTRIC MOTOR.**

(30) Priority: **02.07.80 JP 89194/80**

(43) Date of publication of application:
**21.07.82 Bulletin 82/29**

(45) Publication of the grant of the patent:
**13.11.85 Bulletin 85/46**

(84) Designated Contracting States:
**DE FR GB**

(56) References cited:
**DE-A-2 501 786**
**GB-A-1 514 717**
**JP-A-48 025 111**
**JP-A-49 120 115**
**JP-U-48 028 002**
**JP-Y-51 030 568**
**US-A-3 716 772**
**US-A-3 729 666**

(73) Proprietor: **FANUC LTD**
**3580, Shibokusa Aza-Komanba Oshino-mura**
**Minamitsuru-gun Yamanashi 401-05 (JP)**

(72) Inventor: **KOZAI, Yoshinori**
**16-3, Hirayama 2-chome**
**Hino-shi Tokyo 191 (JP)**
Inventor: **KOBARI, Katsuo**
**6-17-35-210, Fujimi-cho**
**Tachikawa-shi Tokyo 190 (JP)**
Inventor: **SAKAMOTO, Keiji**
**3-27-405, Tamadaira**
**Hino-shi Tokyo 191 (JP)**

(74) Representative: **Blumbach Weser Bergen**
**Kramer Zwirner Hoffmann Patentanwälte**
**Radeckestrasse 43**
**D-8000 München 60 (DE)**

Courier Press, Leamington Spa, England.

## Description

The present invention relates to a speed control apparatus for motors in accordance with the pre-characterizing portion of claim 1.

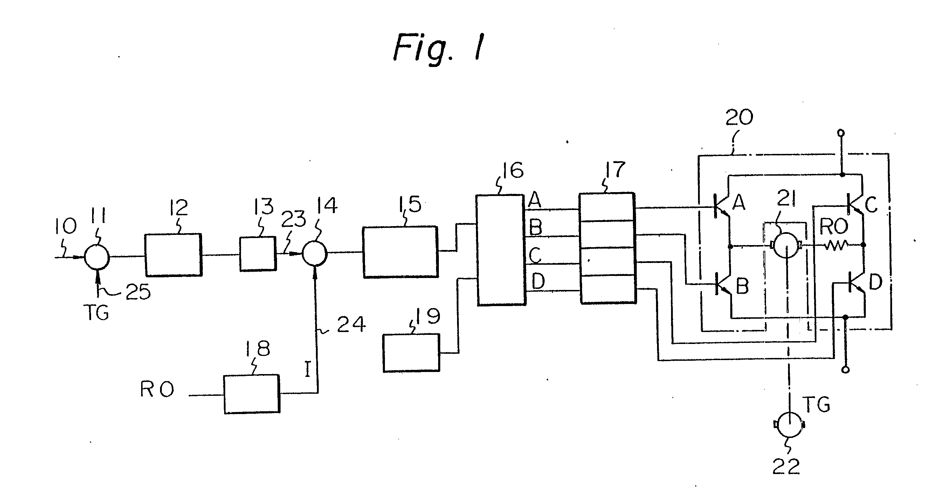

A schematic block diagram of a conventional speed control apparatus for motor driving using a transistorized servo-control system is shown in Fig. 1. A speed command input 10 is added to a speed feedback input 25 at a first adder circuit 11. The added signal is compensated for phase characteristics at a phase compensating circuit 12, passes through an amplitude limiting circuit 13, and is added to a current feedback input 24 at a second adder circuit 14. The added signal is amplified at amplifier 15, is compared with a signal from reference signal generator 19 at comparator circuit 16, and is divided into signals which control each transistorized control element in a motor control device 20. The signals control a motor 21 through insulating amplifiers 17.

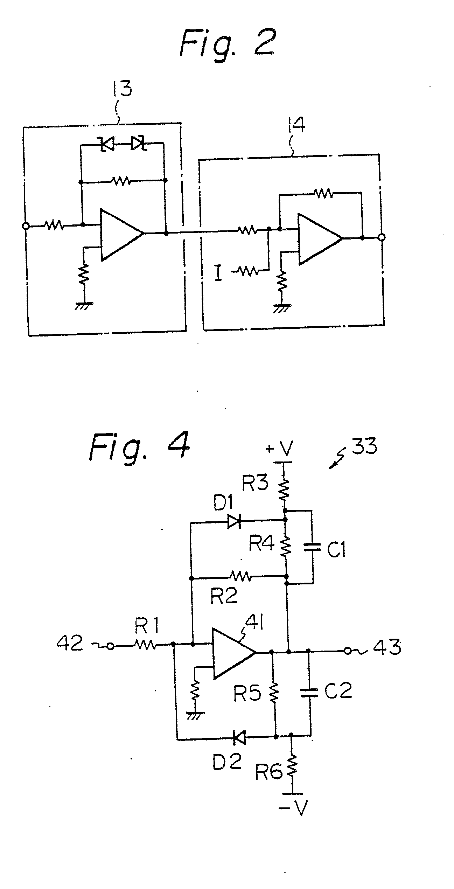

For the above-mentioned amplitude limiting circuit 13 and second adder circuit 14, the circuit shown in Fig. 2 is used. This circuit is a circuit limited by the maximum input amplitude of the current loop, consequently when the gain of the current loop (load inertia etc.) changes, there is a problem in that the current limiting operation becomes unstable. Although there is another on-off control method which does not use the above-mentioned system, when the rotary speed and the characteristics of the motor change, there is another problem in that the frequency of the chopper and the ripple of the electric current are changed. The present invention is proposed in order to solve the above-mentioned problems.

An object of the present invention, in consideration of the above-mentioned problems of conventional apparatus, is to obtain a speed control apparatus enabling the suppression of the occurrence of overshoot in the signal response characteristic and the improvement of the stability of the transient response characteristic, based on the idea of limiting the through rate

$$\left(\frac{dV}{dt}\right)$$

of the command voltage in the amplitude limiting system of the electric current loop.

According to the present invention, the above problem is solved in that said amplitude limiting circuit comprises amplitude limiting resistors each of which being series-connected with one of said diodes the series connected circuits being connected in parallel to the feedback resistor, and capacitors each of which connected in parallel with one of said amplitude limiting resistors respectively, whereby the value of the through rate

$$\left(\frac{dV}{dt}\right)$$

of said amplitude limiting circuit is limited.

DE—A—2 501 786 discloses a speed control device having an amplitude limiting circuit comprised of two diodes and a variable resistor. One of the diodes is connected with its anode to the wiper arm of the variable resistor. The characteristic of this amplitude limiting circuit is similar to that of the circuitry shown in Fig. 2.

US—A—3 729 666 discloses a DC command smoothing circuit which converts step inputs to smoothed command outputs. However, this prior art circuitry is not used for limiting the through rate

$$\left(\frac{dV}{dt}\right)$$

of a commande voltage in the amplitude limiting system of a speed control device of the above mentioned type.

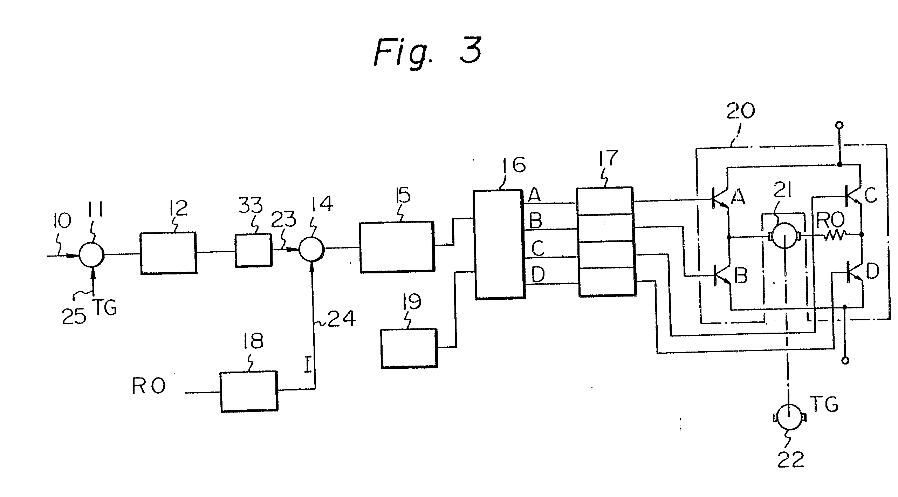

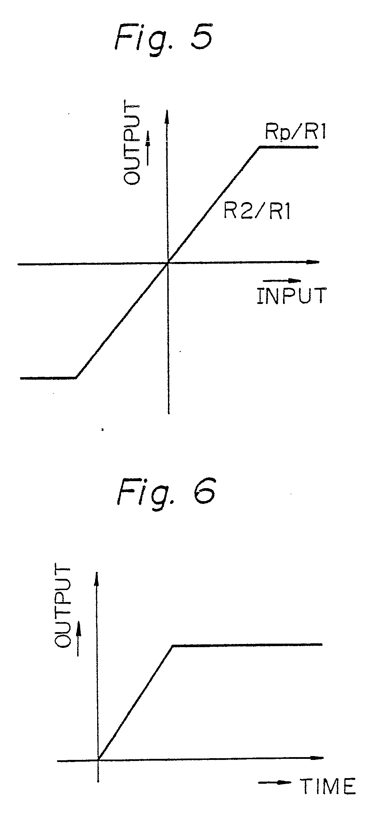

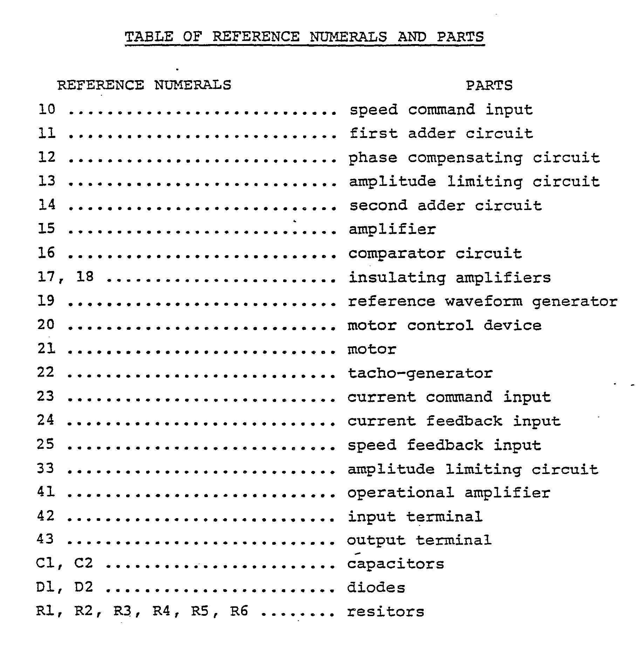

Fig. 1 is a block diagram of a conventional speed control apparatus for motors, Fig. 2 is a circuit diagram of an amplitude limiting circuit and a second adder circuit used for the apparatus in Fig. 1, Fig. 3 is a block circuit diagram of a speed control apparatus for motors according to an embodiment of the present invention, Fig. 4 is a circuit diagram of the amplitude limiting circuit used for the apparatus in Fig. 3, Fig. 5 is a graph showing the relation between input and output of the circuit in Fig. 4, Fig. 6 is a waveform chart of the output signal when the step waveform is applied to the circuit in Fig. 4.

Best mode for carrying out the invention

A speed control apparatus for motors according to an embodiment of the present invention is explained below in reference to Fig. 3. This apparatus is identical with the conventional speed control apparatus in Fig. 1 except for an amplitude limiting circuit. The speed command input 10 is added to the speed feedback input 25 from a tacho-generator 22 at a first adder circuit 11 and the sum of the two inputs is applied to a phase compensating circuit 12. After the phase compensation, the sum is supplied to the amplitude limiting circuit 33. The circuit diagram of the amplitude limiting circuit 33 is shown in Fig. 4. At one input terminal of an operational amplifier 41, resistors R1 and R2 and diodes D1 and D2 are connected to one another. The other input terminal of the operational amplifier 41 is grounded through a resistor. At the output terminal of the operational amplifier 41, the other terminal of resistor R2, a resistor R4, a capacitor C1, a resistor R5, and a capacitor C2 are connected to one another. The other terminal of the diode D1, the other terminal of the resistor R4, and the other terminal of the capacitor C1 are coupled to one another and connected to the positive terminal of the power source through a resistor R3. The other terminal of the diode D2, the other terminal of the resistor R5, and the other terminal of the capacitor C2 are coupled to one another and connected to the negative terminal of the power source through a resistor R6. The input terminal 42 of the amplitude limiting circuit 33 is connected to the other terminal of resistor R1, and an output terminal 43 is connected with the output terminal of the operational amplifier 41.

The output of the amplitude limiting circuit 33, i.e., the current command input 23 is added to the current feedback input 24 at a second adder circuit 14. The current feedback input 24 is a control voltage which is proportional to the armature current of the motor and is supplied through an insulating amplifier 18. The output of the second adder circuit 14 is amplified through an amplifier 15 and applied to a comparator circuit 16. At the comparator circuit 16, the amplified output is compared with the reference signal from a reference waveform generator, for example, a triangular waveform generator. The output of the comparator circuit 16 is divided into four outputs, and the four outputs are supplied to the base circuits of each transistor switch in a motor control device 20 through the insulating amplifier 17. The transistor switches form a bridge circuit, and a circuit consisting of a motor 21 and a resistor R0 connected in series is connected with the bridge circuit. The motor 21 is coupled to the tacho-generator 22 mechanically and the output of the tacho-generator 22 is fed back as the speed feedback input 25.

Below the operation of the amplitude limiting circuit 33 is explained in reference to Figs. 4 through 6. In the circuit of Fig. 4, if the capacitors C1 and C2 are not connected, when the diode D1 is conducting, the gain of the operational amplifier 41 is Rp/R1, where Rp is an equivalent resistance

$$\frac{R2 \cdot R4}{R2+R4}$$

in the parallel connection of the resistors R2 and R4. If the capacitor C1 is connected, application of a small input signal forms an integrating circuit with the capacitor C1 and the resistor R2 connected in parallel and creates an input to output characteristic in the circuit of Fig. 4 as shown in the graph of Fig. 5. Therefore, application of a step waveform signal to the input will result in an output of the amplitude limiting circuit 33 of the waveform shown in Fig. 6. The incline in the growth of the input to output characteristic in Fig. 5 is R2/R1 and the output value of the flat line at the right upper portion is Rp/R1. When the diode D2 is conducting, the same operation is carried out using the capacitor C2 and the resistor R5, instead of the capacitor C1 and the resistor R4, respectively.

As mentioned above, the signal of the waveform having a limited through rate

$$\frac{dV}{dt}$$

instead of the step waveform, can control the speed of the motor to reduce overshoot and other bad influences and enable good control of the transient characteristic.

**Claim**

A speed control apparatus for motors having a current feedback loop, comprising a first adder circuit (11) at which the speed command input (10) is added to the speed feedback input (25), a phase compensating circuit (12) for compensating the phase of the output from said first adder circuit (11), an amplitude limiting circuit (33) having an operational amplifier (41) for receiving the output of said phase compensating circuit (12), having a feedback resistor (R2) and diodes (D1, D2) being connected in parallel to the feedback resistor (R2) so as to operate corresponding to a predetermined positive or negative input voltage range, respectively, and sending the current command input signal (23), a second adder circuit (14) at which said current command input signal (23) is added to the current feedback input signal (24), a reference waveform generating circuit (19), a comparator circuit (16) for comparing the output of said second adder circuit (14) with the output of said reference waveform generating circuit (19), a motor control device (20) for receiving the output of said comparator circuit (16), a motor (21) controlled with said motor control device (20), and a tacho-generator (22) coupled with said motor (21), characterized in that said amplitude limiting circuit (33) comprises amplitude limiting resistors (R4, R5) each of which being series-connected with one of said diodes (D1, D2) the series-connected circuits being connected in parallel to the feedback resistor (R2), and capacitors (C1, C2) each of which connected in parallel with one of said amplitude limiting resistors (R4, R5), respectively, whereby the value of the through rate

$$(\frac{dV}{dt})$$

of said amplitude limiting circuit (33) is limited.

**Patentanspruch**

Geschwindigkeitsregelinrichtung für Motoren mit einem Strom-Rückkopplungsweg, umfassend eine erste Addierschaltung (11), bei der die Sollgeschwindigkeitseingabe (10) auf die zurückgekoppelte Geschwindigkeitseingabe (25) addiert wird, eine Phasenkompensationsschaltung (12) zum Kompensieren der Phase des Ausgangssignals der ersten Addierschaltung (11), eine Amplitudenbegrenzerschaltung (33) mit einem Operationsverstärker (41) zum Empfangen des Ausgangssignals der Phasenkompensationsschaltung (12), mit einem Rückkopplungswiderstand (R2) und zu dem Rückkopplungswiderstand (R2) parallel geschalteten Dioden (D1, D2) zum Arbeiten entsprechend einem vorbestimmten positiven bzw. negativen Eingangsspannungsbereich, die das Addierschaltung (14), bei der das Strom-Soll-Einabesignal (23) auf das Strom-Rückkopplungs-Eingabesignal (24) addiert wird, eine Bezugswellenform-Generatorschaltung (19), eine Vergleicherschaltung (16) zum Vergleichen des Ausgangssignals der zweiten Addierschaltung (14) mit dem Ausgangssignal der Bezugswellenform-Generatorschaltung (19), ein Motorstellglied (20), welches das Ausgangssignal der Vergleicherschaltung (16) empfängt, einen von dem Motorstellglied (20) gesteuerten Motor (21), und einen mit dem Motor (21) gekoppelten Tachogenerator (22), dadurch gekennzeichnet, daß die Amplitudenbegrenzerschaltung (33) Amplitudenbegrenzungswiderstände (R4, R5) enthält, von denen jeder in Reihe mit einer der Dioden (D1, D2) geschaltet ist, wobei die Reihenschaltungen zu dem Rückkopplungswiderstand (R2) parallel geschaltet sind, und Kondensatoren (C1, C2) enthält, von denen jeder parallel zu einem der Amplitudenbegrenzerwiderstände (R4, R5) geschaltet ist, wodurch der Wert des Durchsatzes

$$\frac{dV}{dt}$$

der Amplitudenbegrenzerschaltung (33) beschränkt wird.

## Revendication

Appareil contrôleur de vitesse des moteurs ayant une boucle de contre-réaction de courant, comprenant un premier circuit d'addition (11) dans lequel l'entrée de commande de vitesse (10) est ajoutée à l'entrée de contre-réaction de vitesse (25), un circuit compensateur de phase (12) pour compenser la phase de la sortie de ce premier circuit d'addition (11), un circuit limiteur d'amplitude (33) comprenant un amplificateur opérationnel (41) qui reçoit la sortie dudit circuit compensateur de phase (12), avec une résistance de contre-réaction (R2) et des diodes (D1, D2) connectées en parallèle avec la résistance de contre-réaction (R2) de manière à fonctionner respectivement dans une gamme prédéterminée de tensions d'entrée positives ou négatives respectivement et de délivrer le circuit d'entrée de commande de courant (23), un second circuit d'addition (14) dans lequel le signal d'entrée de commande de courant (23) est ajouté au signal d'entrée de contre-réaction de courant (24), un circuit générateur de signaux de référence (19), un circuit comparateur (16) qui compare la sortie du second circuit d'addition (14) à la sortie du circuit générateur de signaux de référence (19), un dispositif contrôleur du moteur (20) qui reçoit la sortie du circuit comparateur (16), un moteur (21) commandé par le dispositif de commande du moteur (20) et une génératrice tachymétrique (22) couplée à ce moteur (21), caractérisé par le fait que le circuit limiteur d'amplitude (33) comprend des résistances limitant l'amplitude (R4, R5) dont chacune est montée en série avec une des diodes (D1, D2) les circuits séries étant connectés en parallèle avec la résistance de contre-réaction (R2), et les condensateurs (C1, C2) dont chacun est connecté en parallèle avec l'une des résistances limitant l'amplitude (R4, R5), respectivement, de manière que la valeur de la variation

$$\frac{dV}{dt}$$

du circuit limiteur d'amplitude (33) soit elle-même limitée.

# Fig. 1

0 056 059

# Fig. 2

# Fig. 4

Fig. 3

*Fig. 5*

*Fig. 6*

4

**0 056 059**

TABLE OF REFERENCE NUMERALS AND PARTS

REFERENCE NUMERALS | PARTS
--- | ---
10 | speed command input
11 | first adder circuit
12 | phase compensating circuit
13 | amplitude limiting circuit
14 | second adder circuit
15 | amplifier
16 | comparator circuit
17, 18 | insulating amplifiers
19 | reference waveform generator
20 | motor control device
21 | motor
22 | tacho-generator
23 | current command input
24 | current feedback input
25 | speed feedback input
33 | amplitude limiting circuit
41 | operational amplifier
42 | input terminal
43 | output terminal
C1, C2 | capacitors
D1, D2 | diodes
R1, R2, R3, R4, R5, R6 | resitors

5